Europäisches Patentamt

European Patent Office

Office européen des brevets

(11) Veröffentlichungsnummer: **0 037 119**
**B1**

(12) # EUROPÄISCHE PATENTSCHRIFT

(45) Veröffentlichungstag der Patentschrift: **30.01.85**

(51) Int. Cl.⁴: **B 01 D 53/36**

(21) Anmeldenummer: **81102411.6**

(22) Anmeldetag: **31.03.81**

(54) **Verfahren zur katalytischen Gasreinigung.**

(30) Priorität: **31.03.80 PL 223172**

(43) Veröffentlichungstag der Anmeldung:
**07.10.81 Patentblatt 81/40**

(45) Bekanntmachung des Hinweises auf die
Patenterteilung:
**30.01.85 Patentblatt 85/05**

(84) Benannte Vertragsstaaten:
**AT BE CH DE FR GB IT LI SE**

(56) Entgegenhaltungen:
**DE-A-2 249 561**
**DE-A-2 418 108**
**DE-B-1 171 206**
**DE-B-2 350 086**
**US-A-3 889 464**
**US-A-4 041 128**

(73) Patentinhaber: **Polska Akademia Nauk Instytut Katalizy i Fizykochemii Powierzchni ul. Niezapominajek Krakow (PL)**

(72) Erfinder: **Wojciechowski, Jerzy ul. Parkowa 28/7 Kedzierzyn (PL)**

(74) Vertreter: **Hansen, Bernd, Dr.rer.nat. et al Hoffmann, Eitle & Partner Patentanwälte Arabellastrasse 4 D-8000 München 81 (DE)**

Courier Press, Leamington Spa, England.

**Beschreibung**

Die Erfindung betrifft ein Verfahren zur katalytischen Gasreinigung in stationären Vorrichtungen mittels katalytischer Konversion unerwünschter Bestandteile auf einem festen, metallischen oder oxidischen Katalysator mit einer Wärmequelle, die im mittleren Teil des Katalysatorkörpers angeordnet ist, insbesondere die Konversion organischer Verunreinigungen und Kohlenstoffmonoxid.

Die Reaktion der katalytischen Oxidation oder Reduktion der in den Gasen enthaltenen Verunreinigungen erfolgt bei der Reaktionsstarttemperatur. Die Reaktionsstarttemperatur hängt von der Aktivität des verwendeten Katalysators, von der Art der oxidierbaren oder reduzierbaren Verunreinigungen und von der Art der den Katalysator desaktivierenden Bestandteile ab. Die Reaktionsstarttemperatur liegt üblicherweise im Bereich von 200— 400°C. Will man also in der Praxis die bekannten Verfahren zur katalytischen Gasreinigung durchführen, müssen die Gase vor deren Einführung in den Katalysatorkörper bzw. in das Katalysatorbett bis auf einen die Reaktionsstarttemperatur überschreitenden Temperaturbereich erwärmt werden.

Die Gase können durch Einführung heisser Verbrennungsgase membranlos oder durch Passieren der Gase durch Wärmeaustauscher verschiedener energetischer Medien membranartig erwärmt werden.

In der Praxis wird meistens eine kombinierte Erwärmung eingesetzt und zwar durch eine Teilausnutzung der Wärme der heissen Abgase in einem Membranwärmeaustauscher und daraufolgender weiterer Erwärmung durch Einführung heisser Verbrennungsgase in den Gasstrom.

Aber auch dieses kombinierte Verfahren, das teilweise die Abwärme ausnutzt, ist energieaufwendig, da im weiteren eine relativ grosse Energiemenge zur richtigen Erwärmung des Gasstromes notwendit ist. Der Gehalt an organischen Verunreinigungen in Gasen ist relativ niedrig; deren katalytische Konversion löst eine Wärmemenge aus, die einen adiabatischen Temperaturanstieg bewirkt, der meistens nicht zu gross ist, und in den Grenzen von 1 bis 25°C liegt. Dies wiederum macht es notwendig, grosse Wärmeaustauscher zur teilweisen Wärmeregeneration und stetigen Wärmeenergiezufuhr zur Erwärmung der Gase über die Reaktionsstarttemperatur zu bauen. Die Kosten der Gaserwärmung sind hoch und betragen im Druchschnitt 50 bis 80% der Reinigungskosten, was den weiteren Einsatz der katalytischen Gasreinigung sowohl im Umweltschutz als auch bei z.B. industriellen Arbeitsverfahren behindert.

Die vorstehend genannten Verfahren werden durch technische Entwicklungen realisiert, die grundsätzlich auf unterschiedlichen Konstruktionen der Vorrichtungen zum katalytischen Nachbehandeln der Abgase beruhen.

Z.B. ist aus DE—B—23 50 086 eine Vorrichtung zum katalytischen Nachbehandeln der Abgase von Brennkraftmaschinen bekannt, in welcher der Katalysator zwischen dem Anströmsektor und dem vom Abgas entgegengesetzt durchströmten Abströmsektor eines rotierbaren Wärmespeichers geschaltet ist.

Diese Ausgestaltung ermöglicht es, dass der Katalysator nach Erreichen der Arbeitstemperatur diese aufrechtzuerhalten vermag, in dem Wärmeverluste durch entsprechende Wärmezufuhr ausgeglichen werden. Die Wärmezufuhr kann durch Kraftstoffzugabe zu den Abgasen oder durch Anordnung einer Wärmequelle im Abgastrom erfolgen. Als Wärmequelle wird hier eine Heizspirale genutzt, die im Innenraum eines Hohlzylinders eingebaut ist und den Katalysator mittels der umgebenden Gase durch die Wand des Hohlzylinders erwärmt.

Derartige rotierbare Wärmespeicher sind für die Anwendung bei hohen Temperaturen jedoch sehr kostspielig; sie sind daher nicht geeignet für die Nachbehandlung grosser Abgasmengen.

DE—A—24 18 108 beschreibt eine Vorrichtung zur Gasreinigung, bei welcher ein gasdurchlässiger Katalysator verwendet wird. Die Wärmerückgewinnung erfolgt in diesem Prozess in einer Abgasverbrennungsvorrichtung, wobei ein ringförmiger Wärmeaustauscher in Kontakt mit dem heissen Abzugstrom der gereinigten Gase ist.

Aus DE—A—22 49 561 ist eine Thermo- und Doppelbett-Katalysatoren-Anlage mit elektronisch gesteuerter Umkehrwechselströmung bekannt. Die Zwangsläufige Steuerung der Umkehrwechselströmung der Abgase erfolgt mittels temperaturabhängiger Schaltelemente, je nach den erforderlichen Temperaturen, in drei einzelnen Strömungsphasen auf elektronische Weise.

Der Erfindung liegt die Aufgabe zugrunde, eine technische Lösung zu finden, die gegenüber den bekannten Methoden rationeller ist und die bei den Verfahren zur katalytischen Gasreinigung auf chemischem Wege zur Umsetzung der darin enthaltenen Verunreinigungen unter maximaler Ausnutzung der Wärme der heissen Reaktionsgase eingesetzt werden kann.

Die vorstehende Aufgabe wird durch das eingangs genannte Verfahren gelöst, wobei der zu reinigende Gasstrom das Katalysatorbett periodisch in zwei verschiedene Richtungen passiert, stromrichtung mit einer Häufigkeit von ein- bis 120 mal pro Stunde, vorzugsweise 10- bis 20 mal pro Stunde gewechselt wird, und die zum Start und zur Aufrechterhaltung der katalytischen Konversionsreaktion notwendige Wärmequelle sich unmittelbar im Katalysatorbett befindet, und vor und hinter dem Katalysatorbett Schichten von keramischen oder metallischen Profilen angebracht sind, die in den Zeitintervallen zwischen den aufeinanderfolgenden Richtungsänderungen der Gasströmung durch den Reaktor die Wärme ansammeln.

Das Wesen der Erfindung besteht darin, dass anstatt der Erwärmung der Gase vor dem Einführen in das Katalysatorbett diese im mittleren Teil des Katalysatorbetts erwärmt werden, wobei gleichzeitig periodisch die Richtung des durch das Bett strömenden Gasstromes umgekehrt wird. Das Gasreinigungsverfahren verläuft also bei periodischen Gasrichtungsänderungen einmal in der einen und dann in der anderen (umgekehrten) Richtung. Infolge der Gasstromrichtungsänderungen wird keine Wärme aus dem Reaktor herausgeführt, da die Geschwindigkeit des sich verlagernden Gases grösser ist als die der linearen Wärmeverlagerung in dem Katalysatorbett. Zur besseren Wärmeausnutzung ist es ratsam, vor und hinter dem Bett eine metallische oder keramische Füllung in Form von Spiralen, Kugeln, Ringen, Gewölben usw. anzuordnen.

Hier besteht eine gewisse Analogie zu den klassischen Wärmeregeneratoren, die im Hüttenwesen und in der kokschemischen Industrie eingesetzt werden. In diesen Regeneratoren wird die Wärme jedoch durch die Regeneratorelemente den heissen Verbrennungsgasen entnommen, die oft zweckmässig erzeugt werden, um später ein anderes kaltes Gas aufzuwärmen, welches periodisch durch eine heisse Füllung durchgelassen wird. Durch den klassischen Wärmeregeneraator fliessen die Medien abwechselnd: einmal geben die heissen Verbrennungsgase die Wärme an die Füllung ab, dann nimmt das kalte Gas die Wärme der Füllung auf.

In dem erfindungsgemässen Verfahren ist das durch den Reaktor fliessende Medium stets dasselbe; es wird lediglich die Strömungsrichtung des Mediums geändert. Die zum Aufwärmen des Gases nötige Wärmequelle ist im mittleren Teil des Katalysatorbetts angeordnet. Als Wärmequelle können sowohl ein in der Mitte des Katalysatorbetts eingebauter Membranwärmeaustauscher als auch ein im mittleren Teil des Katalysatorbetts befindlicher Sammler dosierter Verbrennungsgase, ein Elektroerhitzer oder andere energetische Medien eingesetzt werden, wobei sie in den mittleren Teil des Katalysatorbetts eingeführt werden müssen. Eine zusätzliche Wärmequelle besteht durch die infolge der katalytische Reaktion entstehende Wärme, die auch in dem mittleren Teil des Reaktors gesammelt wird. Bei relativ hoher Konzentration der katalytisch zu konvertierenden Verunreinigungen verschwindet die Einsatznotwendigkeit anderer Heizmedien sogar nach dem Reaktionsstart. Nach dem erfindungsgemässen Verfahren können die industriellen Abgase gereinigt werden, welche toxische chemisch Verbindungen enthalten, die einer oxidierenden oder reduzierenden katalytischen Konversion unterliegen.

Das Verfahren kann auch zur Erzeugung sogenannter Schutzatmosphären eingesetzt werden, d.h. von Gasen mit vermindertem Sauerstoffgehalt, sowie bei den Desoxidationsverfahren von Neutralgasen. Als Katalysatoren können in dem erfindungsgemässen Verfahren sämtliche der bei herkömmlichen Methoden der katalytischen Gasreinigung angewendeten Katalysatoren, also sowohl Oxidkatalysatoren als auch metallische Katalysatoren eingesetzt werden.

Die Wechselhäufigkeit der Gasstromrichtung durch den Reaktor kann verschieden sein und hängt vov der Höhe der im Katalysatorbett gewünschten Temperatur, vom Wärmewert des Gases und von der Intensität der Wärmequelle im mittleren Teil des Katalysatorbetts ab. Die Wärmequelle kann in dem Katalysatorbett selbst, überschüttet durch den Katalysator, oder in einem katalysatorfreien Raum, z.B. in einem von der oberen und unteren Katalysatorschicht durch gelochte Trennwände abgetrennten Raum, angeordnet werden.

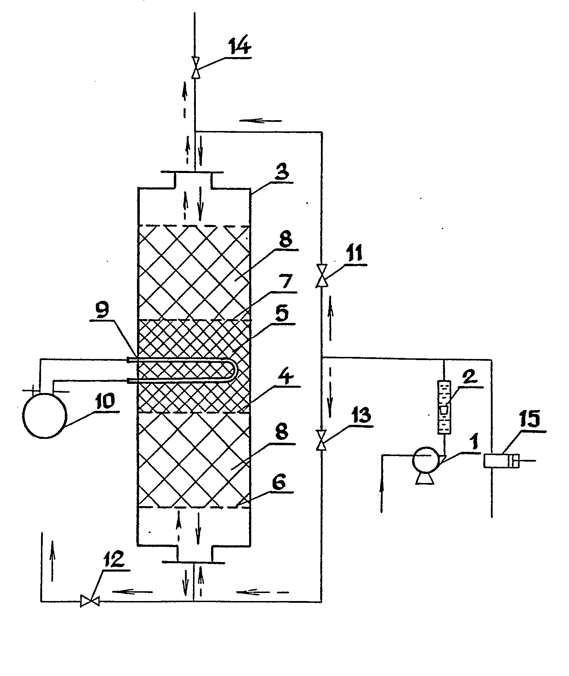

Das Verfahren zur katalytischen Gasreinigung gemäss der Erfindung wurde in einer Apparatur, wie schemitsch in Fig. 1 dargestellt, geprüft. Die Umgebungsluft wird durch ein Gebläse 1 über ein Rotameter 2 in den Reaktor 3 gefördert. Dem Luftstrom führt eine Dosierpumpe 15 die verunreinigten Gase zu. Der Reaktor 3 hat die Gestalt eines Zylinders mit 150 mm Durchmesser und 1500 mm Höhe. Im mittleren Teil des Reaktors, auf der Siebplatte 4 ist das Katalysatorbett 5 angeordnet, das die Oxidations- und Reduktionsreaktionen beschleunigt. Überhalb und unterhalb des Katalysatorbetts wurden auf Siebplatten 6 und 7 keramische Ringe 8 mit Abmessungen 15×15×15 mm angeordnet. In der Mitte des Katalysatorbetts wurde ein elektrischer Heizkörper 9 mit regelbarer Leistung angeordnet, die je nach der Stromspannung durch einen Autotransformator 10 geregelt wird. Das Gasgemisch passiert den Reaktor abwechselnd in verschiedenen Richtungen. Bei offenen Ventilen 11 und 12, und geschlossenen Ventilen 13 und 14 geht der Gasstrom durch den Reaktor abwärts gemäss den in der Zeichnung durch eine kontinuierliche Linie bezeichneten Pfeilen. Wenn dagegen die Ventile 13 und 14 offen und die Ventile 11 und 12 geschlossen sind, geht der Gasstrom aufwärts gemäss den mit Strichlinien gezeichneten Pfeilen.

Es wurde festgestellt, dass mittels des erfindungsgemässen Verfahrens gegenüber der herkömmlichen Methode der katalytischen Reinigung beim Durchführen des Verfahrens ohne Richtungsänderung der Gasstrombewegung in dem Reaktor ein bedeutend niedrigerer Wärmeverbrauch bei sehr hohem Reinigungsgrad der Gase erfolgt. Je nach der Wechselhäufigkeit der Gasbewegungsrichtung durch den Reaktor und je nach dem Wärmewert des zu reinigenden Gases läuft das Verfahren bei niedriger Wärmeenergieaufnahme. Sogar nach dem Reaktionsstart erfolgt—wenn die Verunreinigungsmenge in den Gasen relativ gross ist—das Verfahren autothermisch.

Beispiel I

Zu dem Reaktor 3 wird mittels des Gebläses 1 die Luft mit einer Durchflussgeschwindigkeit von 50 Nm³/h gefördert. Gleichzeitig wird in den Luftstrom durch die Dosierpumpe Propylen in einer Menge von 100 l/h eingeführt. Als Oxidationskatalysator wurde Kupfer-Zink-Katalysator eingesetzt, dessen Herstellung im polnischen Patent Nr. 57 512 beschrieben wurde. Die Indifferenz des Katalysators betrug 6 l. Unterhalb und oberhalb der Katalysatorschicht wurden Körper aus keramischen Ringen mit Abmessungen 15×15×15 mm angeordnet. Im Inneren des Körpers wurde ein elektrischer Heizkörper untergebracht, dessen Stromaufnahme auf 0,5 kW Leistung ausgelegt ist. Die am Eingang in den Reaktor gemessene Propylenkonzentration betrug 0,2 Vol.-%.

Die Wechselhäufigkeit der Gasbewegungsrichtung durch den Reaktor wurde durch die Ventile 11 und 12 sowie 13 und 14 geregelt, indem die Gasbewegungsrichtung alle 5 Minuten gewechselt wurd. Nach der ersten Stunde der Führung des Verfahrens betrug die Propylenkonzentration hinter dem Reaktor 0,05 Vol.-%, nach 2 Stunden 0,02 Vol.-% Nach 3 Stunden wurde auf unter 0,005 Vol.-% abgesenkt und dies durch weitere Dauerperioden des Verfahrens gehalten.

Beispiel II

Der Versuch I wurde wiederholt, wobei die Menge des dosierten Propylens von 100 auf 200 l/h geändert wurde. Die Propylenkonzentration betrug hier vor dem Reaktor 0,4 Vol.-%. Nach der ersten Stunde wurde festgestellt, dass die Propylenkonzentration hinter dem Reaktor auf 0,04 Vol.-% und nach der zweiten Stunde auf 0,01 Vol.-% gefallen war. Nach der dritten Stande erniedrigte sich die Konzentration auf unter 0,001 Vol.-%. Nach dem Ausschalten des elektrischen Heizkorpers stieg die Propylenkonzentration auf 0,005 Vol.-% an und hat sich auf dieser Höhe während weiterer Perioden der Durchfuhrung des Verfahrens gehalten.

Beispiel III

Der Versuch II wurde wiederholt, wobei die Art des Kohlenwasserstoffes geändert wurde. An Stelle von Propylen wurde Äthylen eingesetzt. Die Ergebnisse des Versuches waren praktisch identisch mit denen des Versuches II.

Beispiel IV

Der Versuch II wurde wiederholt, wobei die Art des Kohlenwasserstoffes geändert wurde. An Stelle von Propylen wurde Aceton eingesetzt. Die Ergebnisse des Versuches waren praktisch mit denen des Versuches II identisch.

Beispiel V

Der Versuch II wurde wiederholt, wobei die Art des zu oxidierenden Mediums geändert wurde. An Stelle von Propylen wurde Kohlenstoffmonoxid eingesetzt. Die Ergebnisse des Versuches waren praktisch mit denen von Versuch II identisch.

Beispiel VI

Im Reaktor 3 wurde die keramische Füllung durch eine metallische ersetzt. Diese Füllung hatte die Form von Metallspiralen, die bei der maschinellen Bearbeitung von Metallelementen aus säurebeständigem Stahl entstanden sind. Das Volumen der Füllung vor und nach dem Katalysatorbett war gleich dem bei verwendung von keramischen Füllungen und betrug 10 l. Der Versuch II wurde wiederholt, wobei praktisch gleiche Ergebnisse erhalten wurden.

Beispiel VII

In dem Reaktor 3 wurde der Kupfer-Zink-Katalysator durch einen Platinkatalysator ersetzt, der durch Eintauchen des aktiven Aluminiumoxides in 0,1 %-ige Lösung von Chlorplatinsäure und darauffolgende Trocknung und Erwärmung auf eine Temperatur von 500°C hergestellt wurde. Es wurde der Versuch II wiederholt und man hat festgestellt, dass die Propylenkonzentration nach der ersten Stunde hinter dem Reaktor auf 0,01 Vol.-% und nach der zwieten Stunde auf 0,005 Vol.-% abgesunken war. Nach der dritten Stunde betrug die Propylenkonzentration hinter dem Reaktor unter 0,001 Vol.-%. Nach dem Ausschalten des elektrischen Heizkörpers stieg die Propylenkonzentration hinter dem Reaktor auf 0,002 Vol.-% und hat sich auf dieser Höhe gehalten.

Beispiel VIII

Es wurde der Versuch II wiederholt, wobei lediglich die Schalthäufigkeit der Ventile zur Gasrichtungsänderung im Reaktor geändert wurde. Die Schalthäufigkeit betrug anstatt 5 Minuten 15 Minuten. Es wurde festgestellt, dass nach einer Stunde die Propylenkonzentration hinter dem Reaktor 0,35 Vol.-%, nach 2 Stunden 0,22 Vol.-% und nach 3 und weiteren Stunden auf 0,180 Vol.-% abgesunken war. Nach dem Ausschalten des Heizkörpers stieg die Propylenkonzentration hinter dem Reaktor auf 0,4 Vol.-% an.

Beispiel IX

Es wurde der Versuch II wiederholt, wobei die Umschaltzeit der Ventile zur Änderung der Gasrichtung im Reaktor von 5 Minuten auf 60 Minuten geändert wurde. Es wurde festgestellt, dass nach einer Stunde die Propylenkonzentration hinter dem Reaktor 0,38 Vol.-%, nach 2 Stunden 0,360 Vol.-% betrug und sich nach 3 und weiteren Stunden auf 0,35 Vol.-% eingestellt hatte. Nach dem Ausschalten des Heizkörpers stieg die Propylenkonzentration hinter dem Reaktor auf 0,4 Vol.-%.

### Patentanspruch

Verfahren zur katalytischen Gasreinigung industrieller Abgase in stationären Vorrichtungen mittels katalytischer Konversion unerwünschter Bestandteile auf einem festen metallischen oder oxidischen Katalysator mit einer Wärmequelle, die im mittleren teil des Katalysatorkörpers angeordnet ist, dadurch gekennzeichnet, dass der zu reinigende Gasstrom das Katalysatorbett periodisch in zwei verschiedenen Richtungen passiert, wobei die Gasstromrichtung mit einer Häufigkeit von ein- bis 120 mal pro Stunde, vorzugsweise 10- bis 20 mal pro Stunde gewechselt wird, und die zum Start und zur Aufrechterhaltung der katalytischen Konversionsreaktion notwendige Wärmequelle sich unmittelbar im Katalysatorbett befindet, wobei vor und hinter dem Katalysatorbett Schichten von keramischen oder metallischen Profilen angebracht sind, die in den Zeitintervallen zwischen den aufeinanderfolgenden Richtungsänderungen der Gasströmung durch den Reaktor die Wärme ansemmeln.

### Claim

A method for the catalytic gas purification of industrial waste gases in stationary devices by means of catalytic conversion of undesired components on a solid metallic or oxidic catalyst having a source of heat which is arranged in the center part of the catalyst body, characterized in that the flow of gas to be purified passes the catalyst bed periodically in two different directions, the gas flow direction being changed at a frequency of from 1 to 120 times per hour, preferably 10 to 20 times per hour, and the source of heat necessary for the start and for the maintainance of the catalytic conversion reaction is located directly in the catalyst bed, layers of ceramic or metallic profiles being mounted in front of and behind the catalyst bed which accumulate the heat in the time intervals between the successive changes of direction of the gas flow through the reactor.

### Revendication

Procédure pour la purification catalytique de gaz dans des installations stationnaires par la conversion catalytique de constituants indésirables sur un catalyseur métallique ou à base d'oxydes au moyen d'une source de chaleur qui est disposée dans la partie mediane du corps catalytique, caractérisé en ce que la direction d'écoulement est changée avec une fréquence de 1 à 120 fois par heure, de préférence de 10 à 20 fois par heure, et la source de chaleur necessaire pour le démarrage et l'entretien de la réaction catalytique de conversion se trouve juste dans le dit catalytique, et des couches de profils céramiques ou métalliques qui accumulent la chaleur dans les intervalles de temps entre les changements successifs de direction d'écoulement du gaz à travers le réacteur sont disposées avant et après le lit catalytique.